# EUROPÄISCHE PATENTANMELDUNG

(11) **EP 1 523 888 A2**
(43) Veröffentlichungstag der Anmeldung: **20.04.2005**
(21) Anmeldenummer: 04022306.7
(22) Anmeldetag: 20.09.2004
(51) Int. Cl.: A21C 15/04

(54) **Vorrichtung und Verfahren zum Herstellen von Canape**

(30) Priorität: 11.10.2003 DE 10347865; 10.02.2004 DE 102004006631
(71) Anmelder: Zimmermann, Manfred, 52382 Niederzier (DE)
(72) Erfinder: Zimmermann, Manfred, 52382 Niederzier (DE); Beidt, Klaus, 52382 Niederzier (DE)
(74) Vertreter: Patentanwaltskanzlei Liermann-Castell

(57) **Zusammenfassung**

Um das Herstellen bzw. das Zubereiten von Canape, insbesondere das Zubereiten von Canape-Böden, wesentlich zu erleichtern, schlägt die Erfindung eine Vorrichtung zum Herstellen von Canape mit einem Schneidmittel vor, welches im Wesentlichen gekennzeichnet ist, durch eine Zufuhr für Canape-Boden-Material, eine Schneideinrichtung für Canape-Boden-Material und eine Abfuhr für Canape-Böden.

## Beschreibung

Die Erfindung betrifft eine Vorrichtung zum Herstellen von Canape mit einem Schneidmesser. Darüber hinaus betrifft die Erfindung ein Verfahren zum Herstellen von Canape, bei welchem Canape-Boden-Material mittels eines Schneidmessers zerlegt wird

Das Herstellen von Canape, insbesondere das Herstellen von Canape-Böden aus einem Weißbrot, ist sehr aufwändig, da jeder einzelne Canape-Boden einzeln von Hand mit einem Schneidmesser bzw. mit einem meist zylinderförmigen Ausstecher aus einer Scheibe Brot, insbesondere aus einer Scheibe Weißbrot, ausgeschnitten werden muss.

Hierdurch lassen sich Vorspeisen kreieren, die mundgerecht serviert werden können. Da es im Wesen eines Canapes liegt, insbesondere hinsichtlich Weißbrot, ohne eine etwas härter gebackene Brotkruste serviert zu werden, ist es erforderlich, nur Brotstücke ohne Brotkruste zum Zubereiten von Canapes zu verwenden. Wie vorstehend erläutert, bereitet das Zuschneiden der mundgerechten Canape-Böden erhebliche Mühen.

Es ist deshalb Aufgabe vorliegender Erfindung, das Zubereiten von Canape, insbesondere das Zubereiten eines Canape-Bodens, zu erleichtern.

Die Aufgabe der Erfindung wird von einer Vorrichtung mit einem Schneidmittel gelöst, bei welchem die Vorrichtung im Wesentlichen eine Zufuhr für ein Canape-Boden-Material, eine Schneideinheit für ein Canape-Boden-Material und eine Abfuhr für Canape-Böden aufweist. Außerdem wird die Aufgabe der Erfindung von einem Verfahren zum Herstellen von Canape gelöst, bei welchem beispielsweise Brot mittels eines Schneidmessers zerlegt und das Schneidmesser zumindest teilweise in eine Brotauflageeinrichtung hinein bewegt wird.

Vorteilhafter Weise entfällt hierdurch das bisher aufwändige manuelle Ausschneiden einzelner Canape-Böden. Hierdurch wird zum einen Personal weniger stark zum Herstellen der Canape-Böden gebunden und zum anderen werden auf Grund der Mechanisierung bzw. Automatisierung zwischen 120 und 180 Schneidvorgänge pro Minute gegenüber bisher ca. 12 Schneidvorgänge pro Minute erzielt. Hierdurch wird ein wesentlicher wirtschaftlicher Vorteil gegenüber herkömmlichen Fertigungsmethoden erzielt.

Insbesondere kann ein schnelles und präzises Arbeiten ermöglicht werden, wenn die vorliegende Vorrichtung eine Zufuhr für Canape-Boden-Material aufweist, da ein zu schneidendes Canape-Boden-Material zu dem Schneidmittel geführt wird. Hierdurch wird vermieden, dass beispielsweise Brotscheiben, wie bei der Verarbeitung mit herkömmlichen Vorrichtungen zum Herstellen von Canape lose, und ungeordnet vorliegen.

Das Herstellen von Canape-Böden kann zusätzlich dadurch verbessert werden, dass die vorliegende Vorrichtung eine Abfuhr für Canape-Böden aufweist. Hierdurch ist gewährleistet, dass aus einem Canape-Boden-Material bzw. aus einer Brotscheibe ausgeschnittene fertige Canape-Böden sicher und zuverlässig aus dem eigentlichen Schneidbereich gelangen. In diesem Zusammenhang ist es ebenfalls vorteilhaft, wenn die Vorrichtung nicht nur eine Abfuhr für Canape-Böden, sondern darüber hinaus zusätzlich eine Abfuhreinrichtung beinhaltet, mit welcher die zur Herstellen von Canape nicht weiter benötigten Reste aus dem Schneidbereich bzw. von der Vorrichtung weggeführt werden.

Um die Canape-Böden vollständig und zuverlässig aus einer Brotscheibe oder ähnlichen zu lösen, ist es vorteilhaft, wenn das Schneidmesser zumindest teilweise in eine Canape-Boden-Material-Auflageeinrichtung hineinbewegt wird. Hierdurch ist gewährleistet, dass das Schneidmesser durch die Brotscheibenbegrenzung hindurch bewegt wird, sodass die Gefahr verringert ist, dass die ausgeschnittenen Canape-Böden zumindest in kleinen Teilbereichen eine Verbindung zu der restlichen Brotscheibe beibehält.

Vorzugsweise durchstechen die Schneidmesser also das Brot über dessen Grenzen hinaus und reichen beim Schneidvorgang zumindest bis durch eine Brot-Canape-Material-Auflagefläche hindurch, wodurch insbesondere auch bei anderen als runden Schnittformen ein zuverlässiger Schnitt gewährleistet werden kann.

Demzufolge ist es vorteilhaft, wenn wenigstens ein Schneidmittel in einer Schneideinrichtung angeordnet ist, die für das Schneidmittel einen Schneidhub bereitstellt, so dass das Schneidmittel bis über eine dem Canape-Boden-Material zugewandten Begrenzung einer Canape-Boden-Material-Auflageeinrichtung bewegbar ist. Hierdurch ist es vorteilhafter Weise möglich, dass ein Brot vollständig ohne eine Zusatzbewegung der Schneidmittel, etwa ohne eine Rotation der Schneidmittel um eine Hublängsachse, durchtrennt wird. Es versteht sich, dass in einer Ausführungsvariante natürlich eine Rotation der Schneidmittel um eine Hublängsachse möglich ist.

Im Zusammenhang mit der vorliegenden Erfindung können die Begriffe "Schneidmittel" und "Schneidmesser" dann als synonym angesehen werden, wenn die Schneidmittel selbst Schneidmesser darstellen und nicht zum Aufnehmen bzw. Führen von Schneidmessern verwendet werden. Wird ein Schneidmittel als Schneidmesser verwendet, ist es klar, dass das Schneidmittel eine Schärfe aufweist. Führt das Schneidmittel ein Schneidmesser, weist das Schneidmittel dementsprechend eine Aufnahme für ein Schneidmesser auf.

Die Canape-Boden-Material-Zufuhr kann Leitmittel, wie beispielsweise ein Magazin, insbesondere mit seitlichen Führungsschienen, für ein Brot, insbesondere für eine einzelne Scheibe des Brotes, aufweisen, um so einen zuverlässigen Transport bzw. eine zuverlässige Zufuhr zu gewährleisten. Auch können auf einem Zustellschlitten sowie auf einer Canape-Boden-Material-Auflagefläche Führungsschienen oder -nuten vorgesehen sein, wodurch eine Zufuhr erleichtert und präzisiert werden kann. Des Weiteren können im Bereich der Schneideinrichtung zusätzliche Positioniermittel, wie eine konisch zulaufende Seitenführung oder ein Anschlag vorgesehen sein, so dass das Brot möglichst präzise zugeführt werden kann.

Um die Schneidleistung der Vorrichtung zusätzlich zu erhöhen, ist es vorteilhaft, wenn Schneidmittel einen Messerhalter mit wenigstens zwei Schneidmessern aufweist. Hierdurch werden vorteilhafter Weise mit einer einzigen Schneidbewegung gleichzeitig mehrere Canape-Böden hergestellt. Eine bevorzugte Ausführungsvariante sieht vor, dass das Schneidmittel drei Schneidmesser aufweist, da hierdurch mit einer einzigen Schneidbewegung drei Canape-Böden beispielsweise aus einer handelsüblichen Toastbrotscheibe herstellbar sind.

Da ein Schneidmittel mit mehreren Schneidmessern, beispielsweise mit zwei oder drei Schneidmessern, auch ohne die übrigen Merkmale der vorliegenden Erfindung die Schneidleistung herkömmlicher Schneidvorrichtungen erhöht, ist ein Schneidmittel mit mehr als einem Schneidmesser auch unabhängig von den übrigen Merkmalen der vorliegenden Erfindung vorteilhaft. Insbesondere trifft dies zu, wenn die Schneidmesser während der Schneidbewegung zusätzlich eine Rotationsbewegung ausführen. Durch die zusätzliche Rotationsbewegung der Schneidmesser ist die Schneidpräzision dieses Schneidmittels wesentlich erhöht und damit der Schneidvorgang verbessert.

Besonders vorteilhaft ist es, wenn das Schneidmittel einen konusförmigen, sich in Schneidrichtung erweiternden Hohlkörper aufweist, sodass sich vorteilhafter Weise die aus einem Brot bzw. aus einer Brotscheibe ausgeschnittenen Canape-Böden leichter aus dem Hohlkörper herauslösen. Somit ist die Gefahr verringert, dass sich die ausgeschnittenen Canape-Böden innerhalb des Schneidmittels verklemmen. Hierdurch ist die Funktionssicherheit vorliegender Vorrichtung weiter verbessert. Vorzugsweise erweitert sich das Schneidmittel ausgehend von der Schärfe, mit welcher das Brot im Wesentlichen geschnitten wird, in Richtung auf das der Schärfe gegenüberliegenden Ende des Schneidmittels. Um einen sich derart erweiternden Hohlkörper eines Schneidmittels bereit zu stellen, ist es vorteilhaft, wenn ein Schneidmesser einen ersten Innendurchmesser mit einem ersten Wert und einen zweiten Innendurchmesser mit einem zweiten Wert aufweist und der erste Wert von dem zweiten Wert verschieden ist.

Deshalb hat die Vorrichtung in einer bevorzugten Ausführungsvariante ein Schneidmesser, welches eine Innenzylinderwand aufweist, die zumindest in einem Teilbereich konusförmig ausgebildet ist. Hierdurch ist ein Ausformen der Canape-Böden erheblich erleichtert.

Um zu verhindern, dass sich ein Schneidmittel bzw. ein Schneidmesser auch in einem geringen Teilbereich an der Innenzylinderwand von der Schärfe ausgehend verjüngt, kann es bei einer alternativen Ausführungsform vorteilhaft sein, wenn ein Schneidmesser eine im Bereich seiner äußeren Mantelfläche angefaste Schärfe aufweist. Somit kann der Hohlkörper des Schneidmessers bzw. Schneidmittels sich von der Schärfe ausgehend erweitern, sodass die Gefahr verringert ist, dass das zu schneidende Brot im Innenbereich des Schneidmessers bzw. des Schneidmittels während des Schneidens komprimiert wird.

Um bei einer Rückholbewegung des Schneidmessers beispielsweise ein Brot von den Schneidmessern, insbesondere von den Mantelflächen der Schneidmesser abzustreifen, ist es vorteilhaft; wenn an der Vorrichtung ein Canape-Boden-Material-Abstreifmittel vorgesehen ist, die in der Nähe der Schneidmesser angeordnet ist.

Es wurde gefunden, dass das Bereitstellen von Brotscheiben und das Schneiden der Brotscheiben besonders vorteilhaft: koordiniert und synchronisiert ist, wenn eine Canape-Boden-Material-Zufuhr einen Zustellschlitten aufweist, der mittels eines Getriebes mit den Schneidmitteln verbunden ist. Beispielsweise heben sich die Schneidmittel an, wenn eine Brotscheibe mittels des Zustellschlittens unter die Schneidmittel in den Schneidbereich der Vorrichtung gebracht werden, sodass ein reibungsloser Ablauf zwischen Zustellbewegung und Schneidbewegung der Vorrichtung gewährleistet ist. Eine derartige Koordination bzw. Synchronisation ist baulich besonders einfach mittels eines Getriebes zwischen dem Zustellschlitten und den Schneidmitteln hergestellt.

Eine weitere Ausführungsvariante sieht vor, dass der Zustellschlitten und die Schneidmittel einen gemeinsamen Antriebsmotor aufweisen. Insbesondere, wenn bei einer Ausgestaltung vorliegender Vorrichtung sowohl die Zustellbewegung und die Schneidbewegung automatisiert sind, ist es vorteilhaft, wenn der Zustellschlitten und die Schneidmittel über einen gemeinsamen Antriebsmotor angetrieben sind. Hierdurch kann ein weiterer Antriebsmotor eingespart werden, sodass die gesamte Vorrichtung kompakter baut und dementsprechend günstiger hergestellt werden kann.

Die Schneidmittel werden besonders präzise gegenüber einem Brot geführt, wodurch das Brot optimal genutzt werden kann, wenn die Schneidmittel in einer Führung gegenüber einer Canape-Boden-Material-Auflageeinrichtung verlagerbar gelagert sind. Eine derartige Führung für Schneidmittel ist insbesondere dann vorteilhaft, wenn die Vorrichtung mehrere Schneidmittel aufweist und somit sämtliche Schneidmittel relativ genau bezüglich einer Brotscheibe geführt werden.

Vorzugsweise steht der Schneidbereich über eine Unterlage, auf welche die Vorrichtung steht, über, so dass entweder die Canapes oder das restliche Brot frei nach unten in einen Behälter gelangen können. Im Übrigen können Canape-Boden-Material-Scheibenreste oder die Canapes vorteilhaft auch über Schrägen oder Rutschen abgeführt werden.

Vorzugsweise ist optional ein Handbetrieb vorgesehen, so dass auch bei Stromausfall oder bei fehlender Stromversorgung gearbeitet werden kann. Durch das erfindungsgemäße Verfahren, durch die gezielte und mechanisierte Zufuhr, durch das Magazin und/oder durch die mehreren Schneidmesser kann immer noch wesentlich schneller als mit bisher bekannten Schneidmitteln gearbeitet werden.

Es versteht sich, dass die Vorrichtung auch teilautomatisiert werden kann. Beispielsweise ist in diesem Fall die Canape-Boden-Material-Zufuhr bzw. der Zustellschlitten elektrisch angetrieben. Die Stanzbewegung bzw. die Hubbewegung der Schneidmesser ist beispielsweise mittels eines manuell bewegten Hebels durchzuführen.

Es versteht sich, dass die Schneidmesser bzw. die Schneidmittel nicht nur auf kreisrunde Formen beschränkt ist. Vielmehr können die Schneidmesser bzw. die Schneidmittel unterschiedlichst ausgeformt sein, sodass eine Vielzahl an verschiedenen Canape-Böden herstellbar ist.

Im Hinblick auf die Arbeitssicherheit ist es vorteilhaft, wenn die bewegten Teile der Vorrichtung durch eine Sicherheitsabdeckung abgedeckt sind, sodass die Gefahr verringert bzw. zur Gänze ausgeschlossen ist, dass ein Bedienpersonal in Bereiche greifen kann, in welchen Bauteile der Vorrichtung bewegt sind. Dies ist insbesondere im Bereich der Schneidmesser vorteilhaft, da die bewegten Schneidmesser besonders scharf sind und es hierbei beim Fehlen einer derartigen Schutzabdeckung zu besonders schweren Verletzungen kommen kann.

Vorzugsweise erfolgt die Schneidbewegung gegen eine Rückholfeder. Insbesondere kann die Schneidbewegung durch ein Ziehen eines Schneidmesserhalters in Schneidrichtung bewirkt werden. Dieses Ziehen kann beispielsweise durch den Zustellschlitten an geeigneter Position initialisiert bzw. bewerkstelligt werden. Hiezu können beispielsweise der Schneidmesserhalter und der Schlitten über ein Seil, einen flexiblen Streifen oder ein sonstiges Zugmittel miteinander verbunden sein. Es versteht sich, dass der Schneidmesserhalter und der Zustellschlitten auch über eine Getriebe- bzw. Zahnradverbindung miteinander verbunden sein können.

Die Aufgabe wird auch von einem Verfahren zum Herstellen von Canape gelöst, bei welchem ein Canape-Boden-Material mittels eines Schneidmessers zerlegt wird, bei welchem das Schneidmesser zumindest teilweise in eine Canape-Boden-Material-Auflageeinrichtung hinein bewegt wird. Hierdurch ist sichergestellt, dass die Canape-Böden zur Gänze etwa aus einer Brotscheibe heraus getrennt werden und somit sauber und vollständig getrennt sind. Hierdurch ist die Gefahr verringert, dass einzelne Canape-Böden nach dem Trennen immer noch, wenn auch nur teilweise, mit Brotscheibenreste verbunden sind.

Die Erfindung wird ebenfalls von einem Verfahren zum Herstellen von Canape gelöst, bei welchem Canape-Boden-Material mittels einer Zustellbewegung eines Zustellmittels bereitgestellt und nach der Zustellbewegung, vorzugsweise mittels eine Rückstellebewegung des Zustellmittels, eine Schneidbewegung ausgelöst wird. Durch eine derartige Verfahrensführung ist das vorliegende Herstellverfahren von Canape besonders betriebssicher gestaltet, da eine Schneidbewegung erst durchgeführt wird, wenn das Zustellmittel bereits in einer Rückstellbewegung ist. Somit ist sicher gestellt, dass ein Zustellmittel aus dem Schneidbereich entfernt wurde, wenn ein Schneidmittel bzw. ein Schneidmesser eine Schneidbewegung ausführt.

Im Zusammenhang mit der vorliegenden Erfindung versteht man unter dem Begriff "Canape-Boden-Material" jegliche Nahrungsmittel, die zur Herstellung eines Canape-Bodens geeignet sind. Wie in der vorliegenden Anmeldung mehrfach genannt, kann dieses Canape-Boden-Material ein Brot, insbesondere ein Toastbrot, bzw. diesbezügliche Scheiben sein. Es versteht sich, dass sich das Canape-Boden-Material jedoch nicht auf die hier beispielhaft genannten Materialien wie Brot oder insbesondere Weißbrot beschränkt. Beispielsweise sind auch verschiedene Kuchenbödenarten oder sonstige Materialien mittels der vorliegenden Vorrichtung und dem vorliegenden Verfahren zu Canape-Böden verarbeitbar.

Weiter Vorteile, Ziele und Eigenschaften vorliegender Erfindung werden anhand nachfolgender Erläuterung anliegender Zeichnung beschrieben, in welcher beispielhaft Vorrichtungen zum Herstellen von Canape sowie Bauteilgruppen der selben dargestellt sind.

Es zeigt
- Figur 1: schematisch eine Seitenansicht einer halbautomatischen Canape-Schneidmaschine,
- Figur 2: schematisch eine Seitenansicht einer vollautomatischen Canape-Schneidmaschine,
- Figur 3: schematisch eine Detailansicht eines Schneidbereiches einer Canape-Schneidmaschine,
- Figur 4: schematisch eine perspektivische Ansicht einer Canape-Schneidmaschine mit einem manuell betätigbaren Schneidwerk,
- Figur 5: schematisch eine Seitenansicht eines Brotscheibenmagazins der Canape-Schneidmaschine aus der Figur 4,
- Figur 6: schematisch eine weitere Seitenansicht des Brotscheibenmagazins aus der Figur 5,
- Figur 7: schematisch eine Schnittansicht des Brotscheibenmagazins aus den Figuren 5 und 6 entlang der Schnittlinie AA (siehe Figur 6),
- Figur 8: schematisch eine Seitenansicht des Schneidwerks der Canape-Schneidmaschine aus der Figur 4,
- Figur 9: schematisch eine Ansicht der Schneidmesserhalterung des Schneidwerks aus der Figur 8,
- Figur 10: schematisch einen Querschnitt durch eine Klemmführung des Schneidwerks aus der Figur 8,
- Figur 11: schematisch eine Aufsicht auf eine Brotauflage der Canape-Schneidmaschine aus der Figur 4,
- Figur 12: schematisch eine Seitenansicht eines Führungsstiftes aus der Figur 8,
- Figur 13: schematisch eine Seitenansicht eines Schneidmessers der Canape-Schneidmaschine aus der Figur 4,
- Figur 14: schematisch eine Aufsicht des Schneidmessers aus der Figur 13,
- Figur 15: schematisch eine Aufsicht einer Platte mit drei Aufnahmeöffnungen für Schneidmesser nach den Figuren 13 und 14,
- Figur 16: schematisch eine Seitenansicht des Zustellschlittens der Canape-Schneidmaschine aus der Figur 4 mit einer schematisch dargestellten Getriebeverbindung zu einem Antriebsmotor und zusätzlich einem Handknauf und
- Figur 17: schematisch eine Aufsicht auf den Zustellschlitten aus der Figur 16.

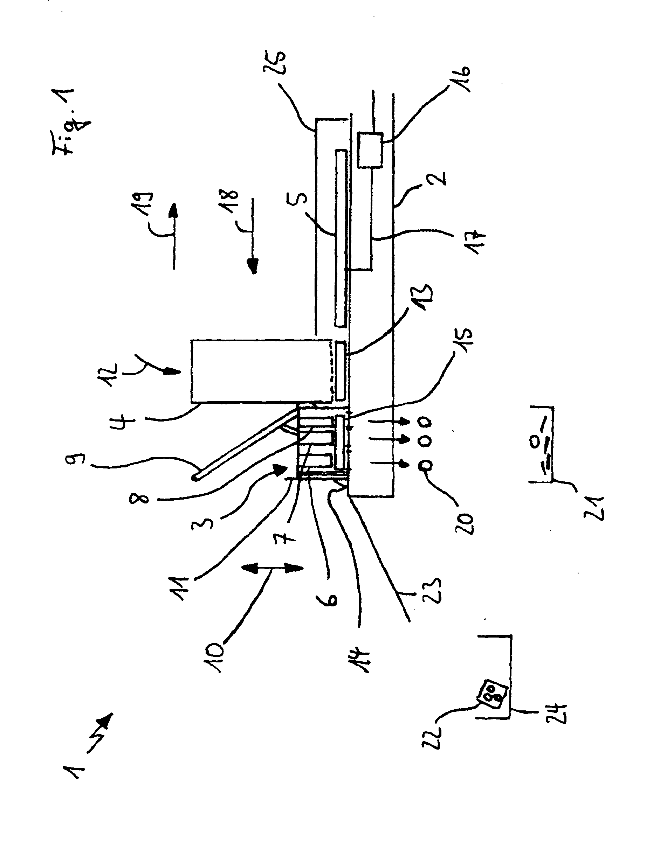

Die in der Figur 1 gezeigte Canape-Schneidmaschine 1 hat ein Gestell 2, welches im Wesentlichen ein Schneidwerk 3, ein Brotscheibenmagazin 4 und einen Brotscheibenzustellschlitten 5 aufweist. Das Schneidwerk 3 weist in diesem Ausführungsbeispiel insgesamt drei Schneidmesser 6, 7 und 8 auf. Das rechte vordere Schneidmesser 6, das linke vordere Schneidmesser 7 und das mittlere hintere Schneidmesser 8 sind in dem Schneidwerk 3 derart gelagert, dass die Schneidmesser 6, 7 und 8 bei einem Betätigen eines Schneidwerkhebels 9 eine Hubbewegung gemäß des Doppelpfeils 10 ausführen. Um während des Betriebs der Canape-Schneidmaschine 1 den Zugriff in den Bereich der Schneidmesser 6, 7 und 8 zu verhindern, weist die Canape-Schneidmaschine 1 eine Schneidwerkabdeckung 11 (hier nur schematisch angedeutet) auf.

Unmittelbar hinter dem Schneidwerk 3 ist das Brotscheibenmagazin 4 angeordnet, welches von oben in Pfeilrichtung 12 beispielsweise mit Toastbrotscheiben bestückt wird, sodass jeweils die untere Toastbrotscheibe 13 auf einer Brotauflagefläche 14 mittels des Brotscheibenzustellschlittens 5 dem Schneidwerk 3 zugeführt werden kann. Exemplarisch ist im Bereich des Schneidwerkes 3 eine bereits zugestellte Toastbrotscheibe 15 schematisch dargestellt. Das Zustellen der Toastbrotscheibe 15 geschieht mittels des Brotscheibenzustellschlittens 5, der von einem Antriebsmotor 16 über ein Zustellstellschlittengetriebe 17 gemäß einer Zustellbewegung 18 und einer Rückstellbewegung 19 bewegt wird.

Die in dem Brotscheibenmagazin 4 bereitgestellten Toastbrotscheiben werden in diesem Ausführungsbeispiel auf Grund der Schwerkraft gegen die Brotauflagefläche 14 gedrückt, sodass immer eine untere Toastbrotscheibe 13 im Bereich des Brotscheibenmagazins 4 auf der Brotauflagefläche 14 angeordnet ist, solange das Brotscheibenmagazin 4 ausreichend mit Toastbrotscheiben bestückt ist.

Bei diesem Ausführungsbeispiel ist das Schneidwerk 3 und der Brotscheibenzustellschlitten 5 derart koordiniert, dass eine Zustellbewegung 18 des Brotscheibenzustellschlittens 5 ausgeschlossen ist, während die Schneidmesser 6, 7 und 8 des Schneidwerkes 3 eine zugestellte Toastbrotscheibe 15 schneiden.

Hat das Schneidwerk 3 eine Schneidbewegung ausgeführt, fallen aus der zugestellten Toastbrotscheibe 15 ausgestanzte Canape-Böden 20 (hier nur exemplarisch beziffert) durch das Gestell 2 in einen Canape-Auffangbehälter 21 und werden dort für eine Weiterverarbeitung bereitgestellt. Die Reste 22 der zugestellten Toastbrotscheibe 15 werden während einer weiteren Zustellbewegung 18 von einer weiteren unteren Toastbrotscheibe 13 über eine Resterutsche 23 in einen Resteauffangbehälter 24 geleitet. Es versteht sich, dass auch die geschnittenen Canape-Böden mittels einer Canape-Böden-Rutsche in den Canape-Auffangbehälter 21 gelangen können.

Da auch der Brotscheibenzustellschlitten 5 bewegt ist, weist die Canape-Schneidmaschine 1 im Bereich dieses Brotscheibenzustellschlittens 5 eine Brotscheibenzustellschlittenabdeckung 25 auf, sodass der unmittelbare Zugriff in den Bereich des bewegten Brotscheibenzustellschlittens 5 insbesondere während des Betriebs der Canape-Schneidmaschine 1 verhindert ist.

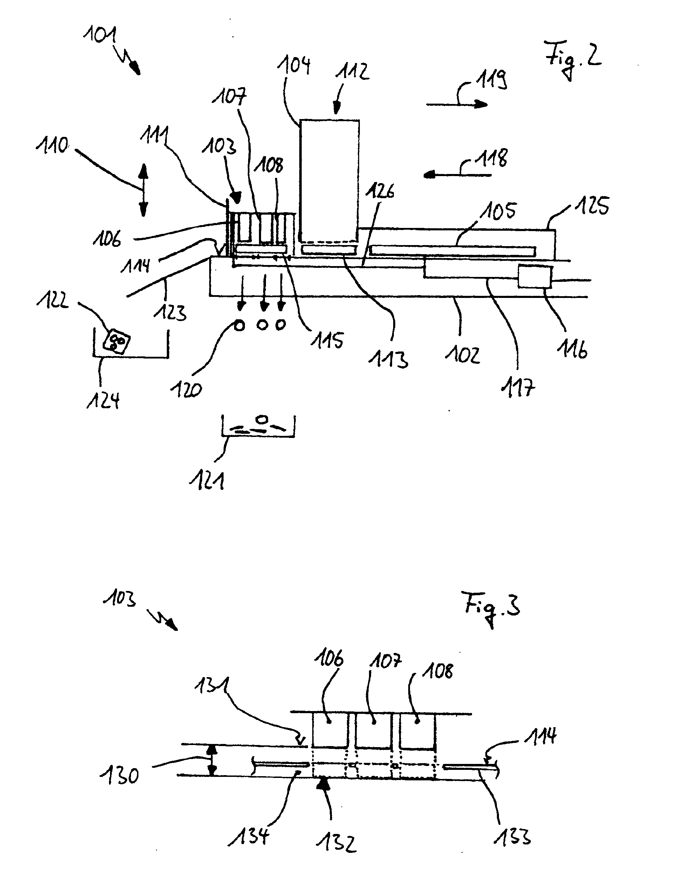

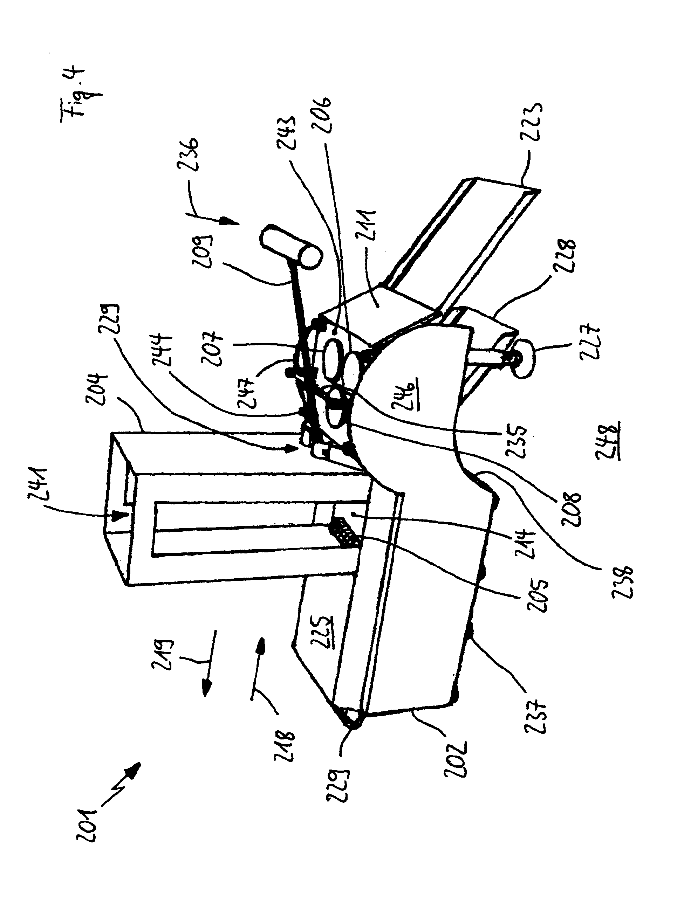

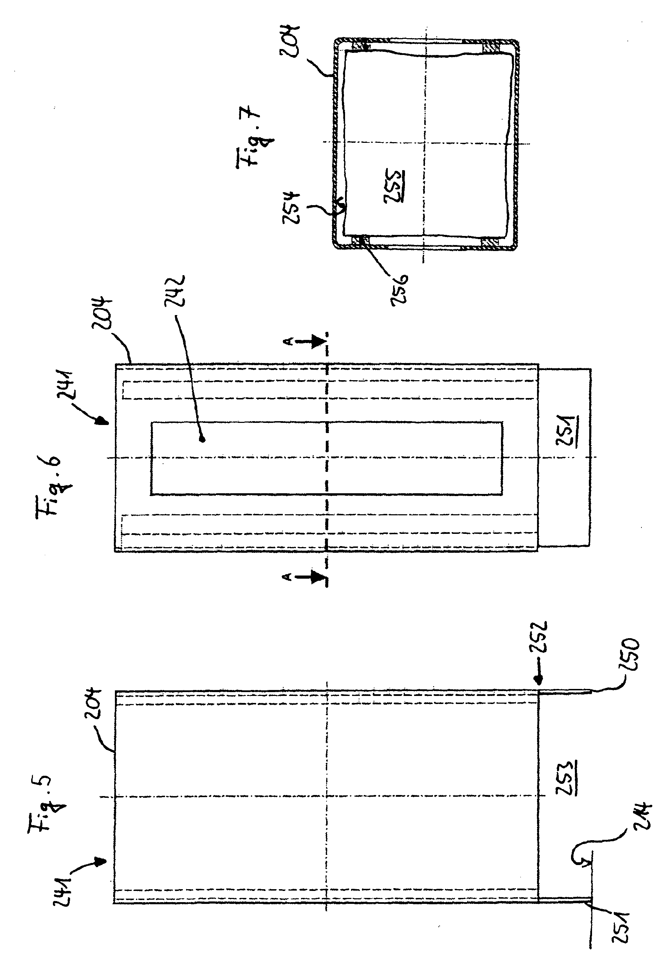

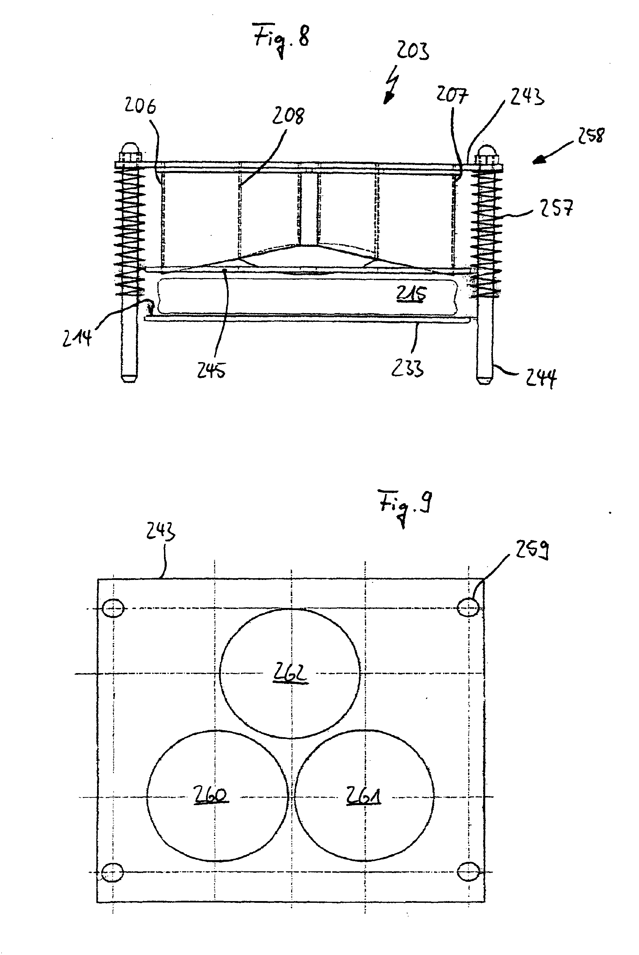

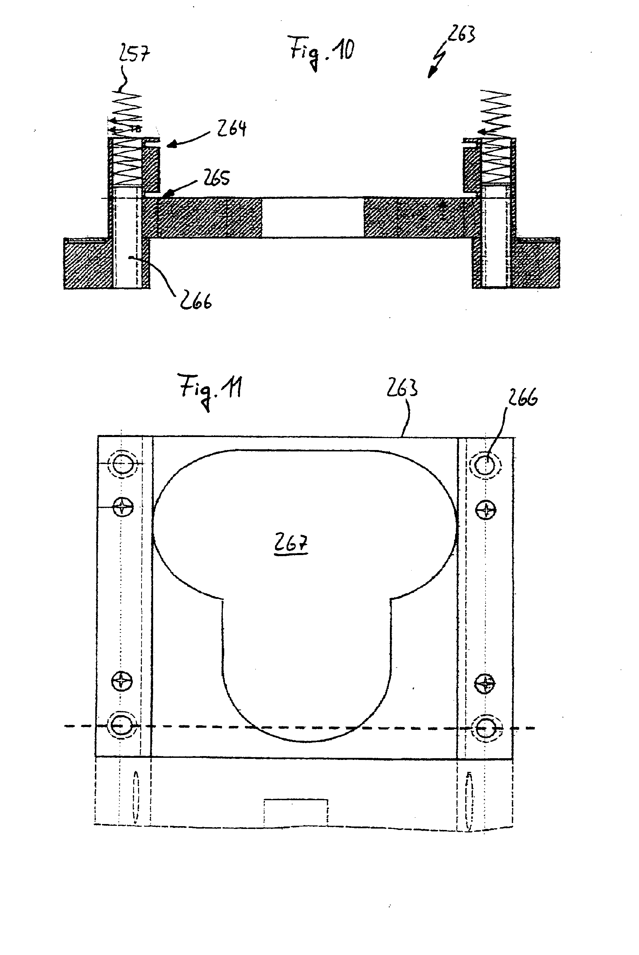

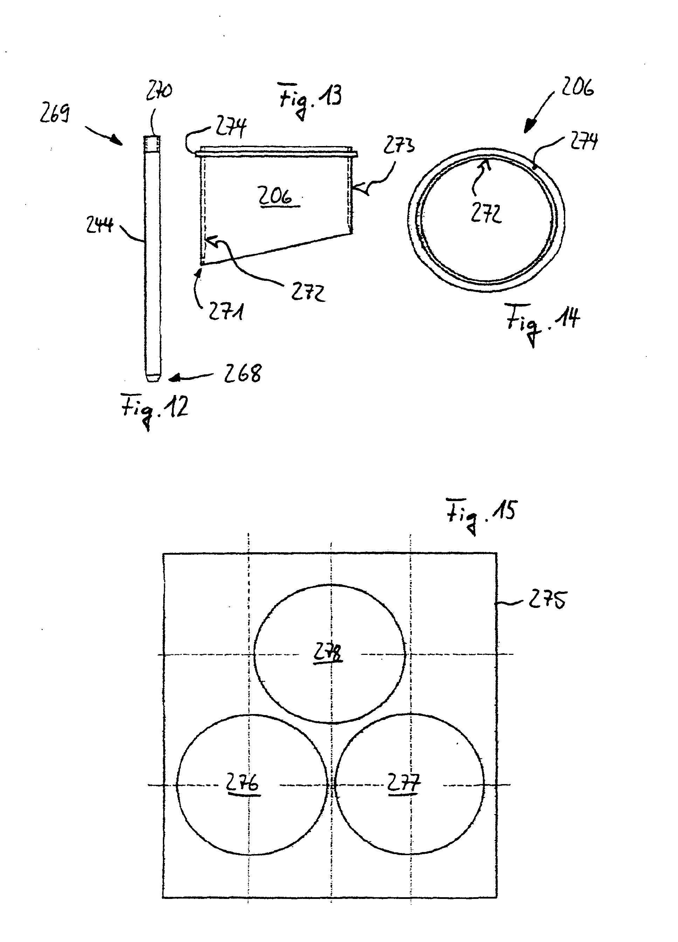

Die in der Figur 2 gezeigte Canape-Schneidmaschine 101 hat im Wesentlichen den gleichen Aufbau wie die Canape-Schneidmaschine 1 aus der Figur 1. Die Canape-Schneidmaschine 101 umfasst ebenfalls ein Gestell 102, in welchem hauptsächlich ein Schneidwerk 103, ein Brotscheibenmagazin 104 sowie ein Brotscheibenzustellschlitten 105 angeordnet sind.

Das Schneidwerk 103 weist ein rechtes vorderes Schneidmesser 106, ein linkes vorderes Schneidmesser 107 und ein hinteres mittleres Schneidmesser 108 auf, welche gemeinsam eine Hubbewegung gemäß des Doppelpfeils 110 ausführen können. Um das Schneidwerk 103 vor einem Zugriff, insbesondere während des Betriebs der Canape-Schneidmaschine 101, zu schützen, weist das Schneidwerk 103 eine Schneidwerkabdeckung 111 auf. Im Bereich des Schneidwerks 103 unter den Schneidmessern 106, 107 und 108 befindet sich eine bereits zugestellte Toastbrotscheibe 115.

Unmittelbar hinter dem Schneidwerk 103 ist das Brotscheibenmagazin 104 angeordnet, in welchem eine Vielzahl an Toastbrotscheiben gemäß der Pfeilrichtung 112 einfüllbar ist. Solange in dem Brotscheibenmagazin 104 Toastbrotscheiben eingefüllt sind, befindet sich unterhalb des Brotscheibenmagazins 104 immer eine untere Toastbrotscheibe 113. Diese untere Toastbrotscheibe 113 liegt auf einer Brotauflagefläche 114 der Canape-Schneidmaschine 101 auf und wird mittels des Brotscheibenzustellschlittens 105 dem Schneidwerk 103 bei Bedarf zugeführt. Hierzu kann der Brotscheibenzustellschlitten 105 zum einen eine Zustellbewegung 118 mit einer daran anschließenden Rückstellbewegung 119 ausführen. Um einen Zugriff zu den Brotscheibenzustellschlitten 105 insbesondere während des Betriebs der Canape-Schneidmaschine 101 zu unterbinden, ist der gesamte Bereich um den Brotscheibenzustellschlitten 105 mittels einer Zustellschlittenabdeckung 125 geschützt.

Der Zustellschlitten 105 wird über ein Zustellschlittengetriebe 117 mittels eines Antriebsmotors 116 bewegt.

Im Gegensatz zu der Canape-Schneidmaschine 1 aus der Figur 1 besitzt die Canape-Schneidmaschine 101, insbesondere das Schneidwerk 103, keinen manuell zu betätigenden Schneidwerkhebel 9. Vielmehr werden die Schneidmesser 106, 107 und 108 in diesem Ausführungsbeispiel mittels eines Verbindungsgetriebes 126 angetrieben, sodass die Schneidmesser 106, 107 und 108 automatisch eine Schneidbewegung gemäß des Doppelpfeils 110 ausführen.

Das hier gezeigte Verbindungsgetriebe 126 ist derart ausgelegt, dass während eines Rückhubs der Schneidmesser 106, 107 und 108 der Brotscheibenzustellschlitten 105 eine Zustellbewegung 118 ausführt und dabei eine untere Toastbrotscheibe 113 in den Bereich des Schneidwerks 103 führt. Hierbei werden gleichzeitig Toastbrotscheibenreste 122 aus dem Bereich des Schneidwerks 103 geschoben. Diese Toastbrotscheibenreste 122 werden über eine Resterutsche 123 zu einem Resteauffangbehälter 124 geleitet. Die fertig ausgeschnitten bzw. ausgestanzten Canape-Böden 120 fallen demgegenüber in einen Canape-Auffangbehälter 121, in welchem sie für eine Weiterverarbeitung bereit liegen.

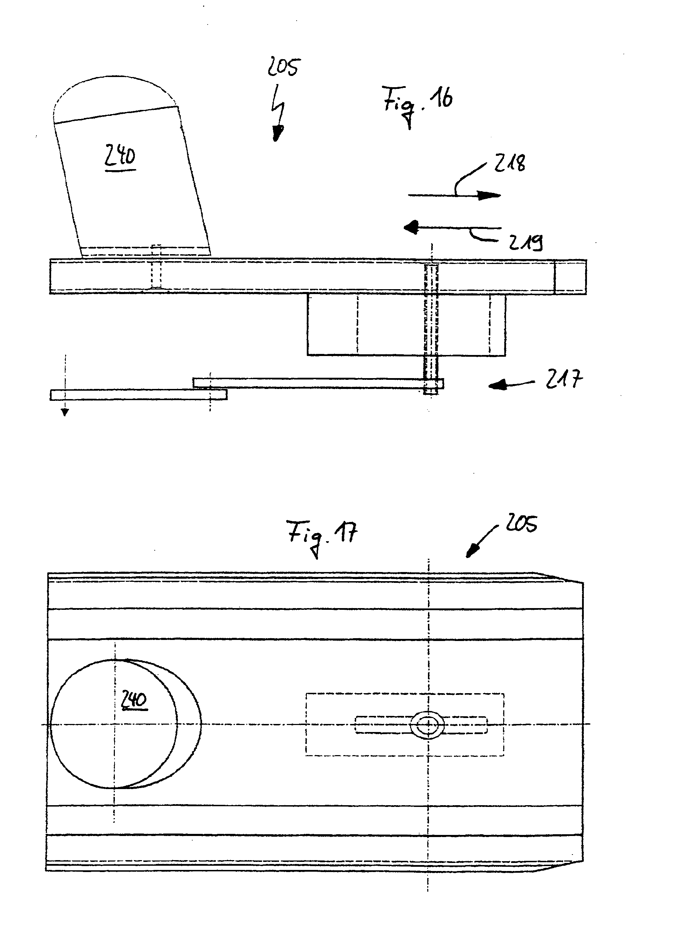

Das in der Figur 3 beispielhaft gezeigte Schneidwerk 103 der Canape-Schneidmaschine 101 aus der Figur 2 weist einen Schneidmesserhub 130 auf, welchen die Schneidmesser 106, 107 und 108 ausgehend von einer Ruheposition 131 bis zu einer Schneidposition 132 ausführen. Hierbei markiert die Ruheposition 131 die Position der jeweiligen Unterkante der einzelnen Schneidmesser 106, 107 und 108 vor dem Schneidvorgang und die Schneidposition 132 die Unterkante der Schneidmesser 106, 107 und 108 kurz nach dem eigentlichen Schneidvorgang und vor der Rückwärtsbewegung der Scheidmesser 106, 107 und 108 in die Ruheposition 131. Die zugestellte Toastbrotscheibe 115 (siehe Figur 2) liegt auf der Brotauflagefläche 114 einer sogenannten Ausstechmatrize 133 auf.

Mittels des Schneidmesserhubes 130, der in einen Bereich 134 unterhalb der Brotauflagefläche 114 reicht, ist sichergestellt, dass jedes der Schneidmesser 106, 107 und 108 die zugestellte Toastbrotscheibe 115 vollständig durchtrennt, sodass die herausgeschnittenen Canape-Böden 120 auf jeden Fall vollständig von den Toastbrotscheibenresten 122 getrennt sind. Somit kann sichergestellt werden, dass die ausgeschnitten Canape-Böden 120 problemlos aus dem Schneidwerk 103 entfernbar sind und idealerweise allein auf Grund der Schwerkraft in einen dafür vorgesehenen Canape-Auffangbehälter 121 fallen. Gegebenenfalls ist es möglich, zusätzlich einen Auswurfmechanismus für die Canape-Böden vorzusehen, so dass ein Abführen der Canape-Böden auch unabhängig von der Wirkung der Schwerkraft vorgenommen werden könnte.

Die in der Figur 4 gezeigte Canape-Schneidmaschine 201 weist gegenüber den vorstehend beschriebenen Canape-Schneidmaschinen 1 und 101 im Bereich des Schneidwerkes 203 unterhalb des Gestells 202 verstellbare Standfüße 227 (hier nur exemplarisch dargestellt) auf, worüber sich die Canape-Schneidmaschine 201 gegenüber einem Untergrund 248 abstützt. Somit hat die Canape-Schneidmaschine 201 beim Aufbringen einer manuellen Schneidkraft 236 einen festen Stand.

Das Schneidwerk 203 verfügt zum Aufbringen der manuellen Kraft 236 über einen Schneidwerkhebel 209, der an einem Ende an einem Lagerbock 229 drehbar befestigt ist. Der Lagerbock 229 ist mit dem Gestell 202 fest verbunden. Über eine Druckauflage 235 wird eine auf den Schneidwerkhebel 209 manuell ausgeübte Kraft 236 auf das Schneidwerk 203 übertragen, so dass die Canape-Böden aus der zugestellten Toastbrotscheibe ausgeschnitten werden.

Der Brotscheibenzustellschlitten 205 hat in diesem Ausführungsbeispiel zusätzlich einen Handknauf 240, an welchem der Zustellschlitten 205 gepackt und gemäß der bereits erläuterten Art und Weise in einer Zustellbewegung 218 und einer Rückstellbewegung 219 in dem Gestell 202 der Canape-Schneidmaschine 201 hin und her bewegt werden kann. Somit ist ein Zustellen einer unteren Toastbrotscheibe 13 alternativ selbst dann möglich, wenn beispielsweise keine Elektrizität zum Betreiben des Antriebsmotors zur Verfügung steht.

Im Bereich der verstellbaren Standfüße 227 der Canape-Schneidmaschine 201 ist das Schneidwerk 203 angeordnet, unmittelbar hinter dem Schneidwerk 203 befindet sich das Brotscheibenmagazin 204. Das Brotscheibenmagazin 204 zeichnet sich zum einen durch eine Brotscheibenmagazineinfüllöffnung 241 und zum anderen durch einen seitlichen Magazineingriff 242 aus. Mittels des seitlichen Magazineingriffs 242 ist die Füllhöhe des Brotscheibenmagazins 204 optisch besonders einfach zu erfassen. Auch lassen sich Brotscheiben 255, die sich gegebenenfalls verklemmt haben, besonders einfach innerhalb des Brotscheibenmagazins 204 in ihrer Lage korrigieren.

Das Schneidwerk 203 umfasst ein rechtes vorderes Schneidmesser 206, ein linkes vorderes Schneidmesser 207 und ein hinteres mittleres Schneidmesser 208. Alle Schneidmesser 206, 207 und 208 sind in einer Schneidmesserhalteplatte 243 angeordnet. Die Schneidmesserhalteplatte 243 wiederum ist in vier Führungsstifte 244 (hier nur exemplarisch beziffert) geführt. An dem der Schneidmesserhalteplatte 243 entgegengesetzten unteren Ende des Schneidwerkes 203 ist eine Ausstechmatrize 233 (siehe Figur 8) vorgehen, welche die Brotauflagefläche 214 bildet. Auf dieser Brotauflagefläche 214 ist die zugestellte Toastbrotscheibe im Bereich des Schneidwerks 203 gelagert.

Zwischen der Schneidmesserhalteplatte 243 und der Ausstechmatrize 233 ist eine Rückhalteplatte 245 (siehe ebenfalls Figur 8) angeordnet, in welcher die Schneidmesser 206, 207 und 208 geführt sind. Mittels der Rückhalteplatte 245 werden Toastbrotscheibenreste 122 während des Rückhubes der Schneidmesser 206, 207 und 208 zurückgehalten, sodass diese Toastbrotscheibenreste zwischen der Rückhalteplatte 245 und der Ausstechmatrize 233 verbleibt, solange bis der Zustellschlitten 205 eine weitere untere Toastbrotscheibe zustellt und die Toastbrotscheibenreste durch die untere Toastbrotscheibe aus dem Schneidwerk 203 hinaus befördert wird. Die Toastbrotscheibenreste werden über eine Resterutsche 223 von der Canape-Schneidmaschine 201 weggeführt. Die fertigen Canape-Böden werden dementsprechend mittels einer Canape-Böden-Rutsche aus dem Bereich des Schneidwerkes 203 weggeführt.

Zur seitlichen Führung der Toastbrotscheiben während der Zustellbewegung, weist das Gestell 202 der Canape-Schneidmaschine 201 eine rechte Seitenwange 246 und eine linke Seitenwange 247 auf. Die rechte Seitenwange 246 und die linke Seitenwange 247 sind im Bereich des Schneidwerks 203 nicht vollständig bis zu einer Unterlage 248 ausgebildet, um somit das Abführen der fertigen Canape-Böden aus dem Bereich des Schneidwerks 203 zu entfernen. Bevorzugt ist das Schneidwerk 203 jedoch über eine Unterlagenkante hinaus angeordnet, sodass die fertigen Canape-Böden 220 nicht auf die Unterlage 248 fallen, sondern an dieser Unterlage 248 vorbei in einem entsprechenden Canape-Auffangbehälter 221 (siehe Figur 2) oder auf eine Canape-Böden-Rutsche 228. Im hinteren Bereich der Canape-Schneidmaschine 201 ist ein Haltegriff 229 angeordnet, mit welchem die Canape-Schneidmaschine 201 beim Transportieren vorteilhaft gehalten werden kann. Neben den verstellbaren Standfüßen 227 weist die Canape-Schneidmaschine 201 an ihrer Unterseite in diesem Ausführungsbeispiel mehrere Saugfüße 237 auf. Hierdurch hat die Canape-Schneidmaschine 201 auf der Unterlage 248 einen besonders guten Halt. Zur Erleichterung von Reinigungsarbeiten weist die Canape-Schneidmaschine 201 unterhalb des Brotscheibenmagazins 204 an der der Unterlage 248 zugewandten Seite eine Reinigungsklappe 238 auf, durch welche das Innere der Canape-Schneidmaschine 201 leicht erreichbar ist.

Das Brotscheibenmagazin 204 (siehe Figuren 5 bis 7) hat einen im Wesentlichen rechteckigen Querschnitt und ist in diesem Ausführungsbeispiel aus einem Edelstahlprofil mit einer Wandstärke von 1,5 mm hergestellt. Das Brotscheibenmagazin 204 hat an seinen der Brotscheibenmagazineinfüllöffnung 241 entgegengesetztem Ende einen rechten Seitensteg 250 und einen linken Seitensteg 251, sodass sich beim Aufstellen des Brotscheibenmagazins 204 auf eine Brotauflagenfläche 214 zwischen dieser Brotauflagenfläche 214 und einer Seitenstegoberkante 252 ein Zwischenraum 253 etabliert.

In diesem Zwischenraum 253 ist im Betriebszustand der Canape-Schneidmaschine 201 eine untere Toastbrotscheibe derart anordenbar, dass diese untere Toastbrotscheibe mittels des Brotscheibenzustellschlittens 205 zu dem Schneidwerk 203 geführt werden kann.

Um zum einen die Reibfläche zwischen der Innenseite 254 des Brotscheibenmagazins 204 und einer Brotscheibe 255 möglichst gering zu halten und um zum anderen die Brotscheibe 255 innerhalb des Brotscheibenmagazins 204 vorteilhaft zu führen, weist das Brotscheibenmagazin 204 in diesem Ausführungsbeispiel vier Führungseinlagen 256 auf, die zwischen der Brotscheibe 255 und der Innenseite 254 des Brotscheibenmagazins 204 angeordnet sind. Die Führungseinlagen 256 bestehen in diesem Ausführungsbeispiel aus einem Kunststoff und sind an die Innenseite 254 angeklebt.

Das Schneidwerk 203 der Canape-Schneidmaschine 201 weist eine Schneimesserhalteplatte 243 auf, in welcher die drei Schneidmesser 206, 207 und 208 angeordnet und gehalten sind. Die Schneidmesserhalteplatte 243 ist in vier Führungsstifte 244 (hier nur exemplarisch beziffert) geführt und wird mittels Rückholfedern 257 in eine obere Position 258 der Führungsstifte 244 gehalten. In diesem Ausführungsbeispiel weist jeder der vier Führungsstifte 244 eine derartige Rückholfeder 257 auf.

Darüber hinaus weist das Schneidwerk 203 eine Ausstechmatrize 233 auf, die eine Brotauflagefläche 214, beispielsweise für eine zugestellte Toastbrotscheibe 215, bereitstellt. Damit nach dem Schneidvorgang Toastbrotscheibeneste der zugestellten Toastbrotscheibe 215 nicht mit den Schneidmessern 206, 207 und 208 in Richtung der oberen Position 258 mitgenommen werden, weist das Schneidwerk 203 zwischen der Schneidmesserhalteplatte 243 und der Ausstechmatrize 233 eine Rückhalteplatte 245 auf, welche die Toastbrotscheibenreste der zugestellten Toastbrotscheibe 215 zwischen der Rückhalteplatte 245 und der Ausstechmatrize 233 hält, sodass die Toastbrotscheibenreste durch eine Zustellbewegung 218 (siehe Figur 4) einer weiteren Toastbrotscheibe wegbefördert werden.

Die in der Figur 9 dargestellte Schneidmesserhalteplatte 243 weist in ihren Eckenbereichen jeweils eine Führungsbohrung 259 auf, welche die Führungsstifte 244 aufnehmen. Darüber hinaus weist die Schneidmesserhalteplatte 243 eine erste Schneidmesseraufnahmebohrung 260, eine zweite Schneidmesseraufnahmebohrung 261 und eine dritte Schneidmesseraufnahmebohrung 261 auf.

Um die Rückhalteplatte 245 und die Ausstechmatrize 233 in einer vorgewählten Position zu halten, weist das Schneidwerk 203 zusätzlich eine Klemmführung 263 (siehe Figur 10) auf, die wiederum zum einen eine Rückhalteplattenut 264 und zum anderen eine Ausstechmatrizennut 265 aufweist (siehe Figuren 10 und 11). Die Klemmführung 263 weist darüber hinaus Haltebohrungen 266 (hier nur exemplarisch beziffert) auf, die zur Aufnahme der Führungsstifte 244 dienen. In den Haltebohrungen 266 sind die bereits in der Figur 8 näher beschriebenen Rückholfedern 257 gelagert. Die Klemmführung 263 weist darüber hinaus eine Durchlassöffnung 267 auf, durch welche die ausgeschnittenen Canape-Böden nach dem Ausstechen bzw. Ausschneiden aus dem Bereich des Schneidwerks 203 fallen (siehe Figur 11).

Die Führungsstifte 244 sind in ihren unteren Bereichen 268 (siehe Figur 12) angefast, sodass sie wesentlich leichter in die Haltebohrungen 266 eingeführt werden können. Im oberen Führungsstiftbereich 269 weist der Führungsstift 244 ein Führungsstiftgewinde 270 auf, mit welchem er formschlüssig mit der Schneidmesserhalteplatte 243 verbunden werden kann.

Das in den Figuren 13 und 14 gezeigte Schneidmesser 206 weist in seinem unteren Bereich eine Schärfe 271 auf. In diesem Ausführungsbeispiel ist die Schärfe 271 an der Schneidmesserinnenseite 272 eingearbeitet. Idealerweise ist die Schärfe 271 jedoch in einem bevorzugten Ausführungsbeispiel an der äußeren Mantelfläche 273 des Schneidmessers 206 angearbeitet.

Eine derartig an der äußeren Mantelfläche 273 des Schneidmessers 206 angeordnete Schärfe 271 ist vorteilhaft, da sich hierbei der Innenzylinder des Schneidmessers 206 durch eine innen angefaste Schärfe 271 nicht verjüngt. Somit ist die Gefahr verringert, dass sich das zuschneidende Brot im Innenbereich des Schneidmessers 206 während des Schneidens derart komprimiert, dass sich das geschnittene Brot im Innenzylinder des Schneidmessers 206 verklemmt und nicht mehr vorteilhaft allein auf Grund der Schwerkraft aus dem Innenzylinder des Schneidmessers 206 gelangt.

An der der Schärfe 271 gegenüberliegenden Seite weist das Schneidmesser 206 in beiden Fällen einen umlaufenden Steg 274 auf. Der Steg 274 dient als Anschlag und Positioniermittel, damit das Schneidmesser 206 senkrecht in der Schneidmesserhalteplatte 243 angeordnet werden kann.

Die in der Figur 15 gezeigte Platte 275 weist eine erste Schneidmesserdurchlassbohrung 276, eine zweite Schneidmesserdurchlassbohrung 277 und eine dritte Schneidmesserdurchlassbohrung 278 auf. Die Platte 275 kann sowohl als Rückhalteplatte 245 als auch als Ausstechmatrize 233 des Schneidwerks 203 genutzt werden.

Der in den Figuren 16 und 17 gezeigte Brotscheibenzustellschlitten 205 weist in seinen oberen Bereich den zusätzlichen Handknauf 240 auf, mittels welchem der Brotscheibenzustellschlitten 205 kumulativ oder alternativ in einer Zustellbewegung 218 und einer Rückstellbewegung 219 manuell hin und her bewegt werden kann.

Für eine in der Regel motorisch angetriebene Zustellbewegung 218 bzw. Rückstellbewegung 219 ist an der Unterseite des Brotscheibenzustellschlittens 205 ein Zustellschlittengetriebe 217 angeordnet, worüber der Brotscheibenzustellschlitten 205 mit einem Antriebsmotor wirkverbunden ist.

### Bezugsziffernliste:

- 1, 101, 201: Canape-Schneidmaschine
- 2, 102, 202: Gestell
- 3, 103, 203: Schneidwerk
- 4, 104, 204: Brotscheibenmagazin
- 5, 105, 205: Brotscheibenzustellschlitten
- 6, 106, 206: rechtes vorderes Schneidmesser
- 7, 107, 207: linkes vorderes Schneidmesser
- 8, 108, 208: hinteres mittleres Schneidmesser
- 9, 209: Schneidwerkhebel
- 10, 110: Doppelpfeil
- 11, 111,211: Schneidwerkabdeckung
- 12, 112: Pfeilrichtung
- 13, 113: untere Toastbrotscheibe
- 14,114,214: Brotauflagefläche
- 15, 115: zugestellte Toastbrotscheibe
- 16, 116: Antriebsmotor
- 17, 117: Zustellschlittengetriebe
- 18, 118, 218: Zustellbewegung
- 19, 119, 219: Rückstellbewegung
- 20, 120: Canape-Böden
- 21, 121: Canape-Auffangbehälter
- 22, 122: Toastbrotscheibenreste
- 23, 123, 223: Resterutsche
- 24, 124: Resteauffangbehälter
- 25, 125, 225: Zustellschlittenabdeckung
- 126: Verbindungsgetriebe
- 130: Schneidmesserhub
- 131: Ruheposition
- 132: Schneidposition
- 133,233: Ausstechmatrize
- 134: Auslaufbereich
- 227: Standfüße
- 228: Canape-Böden-Rutsche
- 229: Lagerbock
- 235: Druckauflage
- 236: manuell ausgeübte Kraft
- 237: Saugfüße
- 238: Reinigungsklappe
- 240: Handknauf
- 241: Brotscheibenmagazineinfüllöffnung
- 242: seitlicher Magazineingriff
- 243: Schneidmesserhalteplatte
- 244: Führungsstifte
- 245: Rückhalteplatt
- 246: rechte Seitenwange
- 247: linke Seitenwange
- 248: Unterlage
- 250: rechter Seitensteg
- 251: linker Seitensteg
- 252: Seitenstegoberkante
- 253: Zwischenraum
- 254: Innenseite
- 255: Brotscheibe
- 256: Führungseinlage
- 257: Rückholfeder
- 258: obere Position
- 259: Führungsbohrungen
- 260: erste Schneidmesseraufnahmebohrung
- 261: zweite Schneidmesseraufnahmebohrung
- 262: dritte Schneidmesseraufnahmebohrung
- 263: Klemmführung
- 264: Rückhalteplattenut
- 265: Ausstechmatrizennut
- 266: Haltebohrung
- 267: Durchlassöffnung
- 268: unterer Führungsstiftbereich
- 269: oberer Führungsstiftbereich
- 270: Führungsstift
- 271: Schärfe
- 272: Schneidmesserinnenseite
- 273: äußere Mantelfläche
- 274: umlaufender Steg
- 275: Platte
- 276: erste Schneidmesserdurchlassbohrung
- 277: zweite Schneidmesserdurchlassbohrung
- 278: dritte Schneidmesserdurchlassbohrung

## Patentansprüche

1. Vorrichtung zum Herstellen von Canape mit einem Schneidmittel, im Wesentlichen ***gekennzeichnet durch*** eine Zufuhr für ein Canape-Boden-Material, eine Schneideinrichtung für ein Canape-Boden-Material und eine Abfuhr für Canape-Böden.

2. Vorrichtung zum Herstellen von Canape mit einem Schneidmittel, ***dadurch gekennzeichnet, dass*** das Schneidmittel einen Messerhalter mit wenigstens zwei Schneidmessern aufweist.

3. Vorrichtung zum Herstellen von Canape mit einem Schneidmittel, ***dadurch gekennzeichnet, dass*** wenigstens ein Schneidmittel in einer Schneideinrichtung angeordnet ist, die für das Schneidmittel einen Schneidhub bereitstellt, so dass das Schneidmittel bis über eine dem Canape-Boden-Material zugewandten Begrenzung einer Canape-Boden-Material-Auflageeinrichtung bewegbar ist.

4. Vorrichtung zum Herstellen von Canape mit einem Schneidmittel, ***dadurch gekennzeichnet, dass*** das Schneidmittel einen konusförmigen, sich in Schneidrichtung erweiternden Hohlkörper aufweist.

5. Vorrichtung nach einem der Ansprüche 1 bis 4, ***dadurch gekennzeichnet, dass*** ein Schneidmesser einen ersten Innendurchmesser mit einem ersten Wert und einen zweiten Innendurchmesser mit einem zweiten Wert aufweist und der erste Wert von dem zweiten Wert verschieden ist.

6. Vorrichtung nach einem der Ansprüche 1 bis 5, ***dadurch gekennzeichnet, dass*** ein Schneidmesser eine Innenzylinderwand aufweist, die konusförmig ausgebildet ist.

7. Vorrichtung nach einem der Ansprüche 1 bis 6, ***dadurch gekennzeichnet, dass*** ein Schneidmesser eine im Bereich seiner äußeren Mantelfläche angefaste Schärfe aufweist.

8. Vorrichtung nach einem der Ansprüche 1 bis 7, ***gekennzeichnet durch*** Canape-Boden-Material-Abstreifmittel, die in der Nähe der Schneidmesser vorgesehen sind.

9. Vorrichtung nach einem der Ansprüche 1 bis 8, ***dadurch gekennzeichnet, dass*** eine Canape-Boden-Material-Zufuhr einen Zustellschlitten aufweist, der mittels eines Getriebes mit den Schneidmitteln verbunden ist.

10. Vorrichtung nach Anspruch 9, ***dadurch gekennzeichnet, dass*** der Zustellschlitten und die Schneidmitteln einen gemeinsamen Antriebsmotor aufweisen.

11. Vorrichtung nach einem der Ansprüche 1 bis 10, ***dadurch gekennzeichnet, dass*** die Schneidmittel in einer Führung gegenüber einer Canape-Boden-Material-Auflageeinrichtung verlagerbar gelagert sind.

12. Vorrichtung nach einem der Ansprüche 1 bis 11, ***dadurch gekennzeichnet, dass*** eine Canape-Boden-Material-Zufuhr Leitmittel, wie beispielsweise ein Magazin, insbesondere mit seitlichen Führungsschienen, für ein Canape-Boden-Material, insbesondere für eine einzelne Scheibe des Canape-Boden-Materials, aufweist.

13. Verfahren zum Herstellen von Canape, bei welchem ein Canape-Boden-Material mittels eines Schneidmessers zerlegt wird, ***dadurch gekennzeichnet, dass*** das Schneidmesser zumindest teilweise in eine Canape-Boden-Material-Auflageeinrichtung hinein bewegt wird.

14. Verfahren zum Herstellen von Canape, bei welchem ein Canape-Boden-Material mittels einer Zustellbewegung eines Zustellmittels bereitgestellt und nach der Zustellbewegung, vorzugsweise mittels einer Rückstellbewegung des Zustellmittels, eine Schneidbewegung ausgelöst wird.
